# EUROPEAN PATENT SPECIFICATION

(11) **EP 3 562 688 B1**
(45) Date of publication and mention of the grant of the patent: **13.07.2022**
(21) Application number: 17829902.0
(22) Date of filing: 27.12.2017
(51) Int. Cl.: B60C 7/18, B60B 9/04, B60B 9/26, B60C 9/18, B60C 11/00, B60C 11/03, B60C 7/14

(54) **NON-PNEUMATIC TIRE**
LUFTLOSER REIFEN
PNEU NON PNEUMATIQUE

(30) Priority: 30.12.2016 WO PCT/US2016/069388
(43) Date of publication of application: 06.11.2019
(73) Proprietor: Compagnie Générale des Etablissements Michelin, 63000 Clermont-Ferrand (FR)
(72) Inventor: GAYLO, Ryan, Greenville South Carolina 29605 (US); NAROWSKI, Brian, Greenville South Carolina 29605 (US); RHYNE, Timothy Brett, Greenville South Carolina 29605 (US); CRON, Steven M., Greenville South Carolina 29605 (US)
(74) Representative: Casalonga
(86) International application number: PCT/US2017/068499
(87) International publication number: WO 2018/125902

(56) References cited:
- WO-A1-03/018332
- WO-A1-2013/095499
- WO-A1-2016/116491

## Description

### CROSS-REFERENCE TO RELATED APPLICATIONS

This application claims priority to, and the benefit of, International Patent Application No. PCT/US2016/069388, filed December 30, 2016 with the U.S. Patent Office (acting as the US Receiving Office), < - >

### BACKGROUND

### Field

The embodiments herein relate generally to shear bands and treads for use with non-pneumatic tires.

### Description of the Related Art

It is appreciated that a reduction in the rolling resistance of a tire may improve fuel efficiency by reducing the amount of energy wasted during use. However, in an effort to reduce the rolling resistance of a tire, other sacrifices are often made, which may result in the reduction of other performance measures. For example, when reducing the rolling resistance of a tire, the tread thickness is often reduced, along with the voids contained therein. As a result, wet weather performance is negatively impacted due to the reduction in void volume. In instances such as this, there is a desire to reduce the tread thickness to reduce rolling resistance while maintaining a desired groove depth to help maintain a desired level of wet weather performance. Specifically, when reducing the tread thickness, the depth of any longitudinal groove is also reduced, which immediately reduces void volume useful for consuming water to promote tread-road contact. If the grooves are widened to recapture lost void, a reduction is contact surface area decreases, which reduces the amount of traction available and, in turn, reduces certain tire performance measures. Accordingly, there is a need for an improved tire tread capable of reducing rolling resistance while also minimizing any reduction in wet weather performance.

### SUMMARY

The invention is defined by the non-pneumatic tire according to claim 1. Preferred embodiments are defined in the dependent claims. <In particular, the present invention relates to a non-pneumatic tire according to the preamble of claim 1, such as it is for example known from WO 03/018332A1 .>

The foregoing and other embodiments, objects, features, and advantages of the embodiments herein will be apparent from the following more detailed descriptions of particular embodiments, as illustrated in the accompanying drawings wherein like reference numbers represent like parts of the embodiments.

### BRIEF DESCRIPTION OF THE DRAWINGS

FIG. **1** is a perspective view of a non-pneumatic tire, in accordance with an embodiment.
FIG. **2** is a sectional view of a prior art non-pneumatic tire tread taken along line **2-2** of the tire shown in FIG. **1****.**
FIG. **3** is a sectional view of an improved non-pneumatic tire tread, the improved non-pneumatic tire tread being an improvement of the prior art non-pneumatic tire tread shown in FIG. **2****,** in accordance with an embodiment.

### DETAILED DESCRIPTION

Embodiments herein describe an improved non-pneumatic tire.

In particular embodiments, a non-pneumatic tire comprises a rigid central annular portion. The non-pneumatic tire further comprises an annular shear band, which is circumferentially arranged about the central annular portion. The annular shear band includes a plurality of reinforcement layers, each such layer including a plurality of elongate reinforcements. Neither the shear band nor the non-pneumatic tire is configured to retain any pressurized air. The non-pneumatic tire further comprises one or more deformable spokes, which are arranged between the annular shear band and the central annular portion. The one or more deformable spokes are spaced apart around a rotational axis of the central annular portion or more generally of the non-pneumatic tire, where a length of the each deformable spoke extends primarily in a radial direction of the central annular portion or non-pneumatic tire. The rotational axis of the central annular portion and the non-pneumatic tire corresponds to an axial direction of the central annular portion and the non-pneumatic tire. The axial direction of the central annular portion or non-pneumatic tire is perpendicular to the radial direction thereof. The annular shear band is operably attached to a radially outward extent of the one or more deformable spokes, which, are in turn, connected at a radially inward extent to the central annular portion.

The non-pneumatic tire further includes a tread. The tread defines an outer, ground-engaging side of the non-pneumatic tire, which extends annularly around the non-pneumatic tire and the shear band. The tread has a length, which extends in a circumferential direction of the non-pneumatic tire. The tread also has a thickness, which extends radially inward from the ground-engaging side of the tread to a bottom side of the tread. The tread thickness extends perpendicular to the tread length. The tread further includes a width, which extends laterally between a pair of opposing lateral sides of the tread. The width of the tread extends perpendicular, or transverse, to both a direction of the tread thickness and a direction of the tread length.

In particular embodiments, the non-pneumatic tire further includes a plurality of tread elements. Tread elements are generally formed by spaced apart voids or a lateral side of the tread spaced apart from any one or more voids. The plurality of tread elements are arranged along the outer, ground-engaging side of the tread and are spaced apart by a longitudinal groove. A longitudinal groove extends primarily in the direction of the tread length (*i.e.,* the circumference of the non-pneumatic tire when utilized therewith), although it is not required to extend the full length of the tread. It is appreciated that the tread may include more than one longitudinal groove.

To permit a reduction of tread thickness without sacrificing longitudinal groove depth, one or more of the shear band reinforcement layers is parsed or separated, such that a portion of the reinforcement layer is eliminated ("displaced") to create a spacing or void within the layer through which a longitudinal groove extends. By doing so, the depth of the longitudinal groove is equal to or greater than a maximum thickness of the tire tread as measured along a tread element arranged adjacent (next to) the longitudinal groove. The portion of the tread thickness associated with the tread element is measured from the most radially outward point (outermost radial point) of the annular shear band below the tread element to the outer, ground-engaging side of the tread associated with the corresponding tread element. In certain embodiments, the depth of the longitudinal groove is equal to at least one hundred twenty-five percent (125%) of the adjacent tread element thickness. In other embodiments, the depth of the longitudinal groove is equal to at least two hundred percent (200%) of the adjacent tread element thickness. In these embodiments, for example, the depth of the longitudinal groove may be equal to twelve millimeters, and the maximum thickness of the adjacent tread element may be equal to six millimeters. It is appreciated that, if the tread includes more than one longitudinal groove, the depth of each longitudinal groove may not be equal to the depth of all other longitudinal grooves or, in alternate embodiments, the depth of each longitudinal groove may not be equal to the depth of any of the other longitudinal grooves.

It is appreciated that any tread element may form a rib or a tread block ("lug"). A rib may extend continuously along the tread length, or may include intervening sipes or lateral grooves to form a discontinuous rib. A block is a tread element bounded by spaced apart lateral grooves or sipes. A tread block may be arranged with other blocks to form a discontinuous rib. For example, in certain embodiments, the plurality of tread elements of the non-pneumatic tire include at least one pair of tread elements spaced apart by a lateral groove. The lateral groove extends primarily in the direction of the tread width (*i.e.,* the axial direction of the non-pneumatic tire when utilized therewith), although it is not required to extend fully across the width of the tread. It is appreciated that the tread may include more than one lateral groove.

As previously noted, the non-pneumatic tire includes a plurality of reinforcement layers arranged within the annular shear band. At least one, or a plurality, of the plurality of reinforcement layers includes one or more displaced (*i.e.,* discontinuous) reinforcement layers extending circumferentially around the non-pneumatic tire and in a direction of the tread width. Each of the one or more displaced reinforcement layers includes a discontinuity (also referred to as a "spacing" or "void") into which a longitudinal groove extends as noted previously. When multiple displaced reinforcement layers are present, the multiple displaced reinforcement layers are stacked together to create a common discontinuity where the discontinuity of each layer is laterally aligned (or "stacked") such that the discontinuities together form the common discontinuity. In the end, the one or more displaced reinforcement layers are arranged within the annular shear band such that a longitudinal groove extends through the one or more displaced reinforcement layers. In these embodiments, the longitudinal groove separates opposing portions of the one or more displaced reinforcement layers located below opposing tread elements arranged on either side of the longitudinal groove in the direction of the tread width. The plurality of reinforcement layers also includes one or more non-displaced (*i.e.,* continuous) reinforcement layers extending circumferentially around the non-pneumatic tire and across the tread width and in the direction of the tread width. The one or more non-displaced reinforcement layers are arranged within the annular shear band such that the longitudinal groove does not extend through any of the one or more non-displaced reinforcement layers. The one or more displaced reinforcement layers are arranged between the tread and the one or more non-displaced reinforcement layers.

In particular embodiments, the one or more displaced reinforcement layers and the one or more non-displaced reinforcement layers extend linearly or along a slightly arcuate path in the direction of the tread width. In other words, none of the plurality of reinforcement layers forming the common discontinuity in the shear band extend laterally, that is, in the direction of the tread width, along any alternating non-linear path to form the common discontinuity into which a longitudinal groove extends.

In particular embodiments, due to the structure of the annular shear band in relation to the one or more longitudinal grooves, the one or more longitudinal grooves are able to utilize the entire tread depth, which results in the longitudinal grooves remaining active throughout an entire useful life of the tread. With respect to the stacked arrangement of the plurality of reinforcement layers, the size and depth of the reinforcement stacks are a function of the desired width of the tread element and the required depth of the one or more longitudinal grooves. In this way, a more shallow tread depth may be employed with the one or more longitudinal grooves having an increased depth due to the stacked arrangement of the plurality of reinforcement layers. As a result, the rolling resistance and mass of the non-pneumatic tire is reduced without sacrificing wet weather performance.

Particular embodiments of the non-pneumatic tires discussed above will now be described in further detail below in association with the figures filed herewith exemplifying the embodiments.

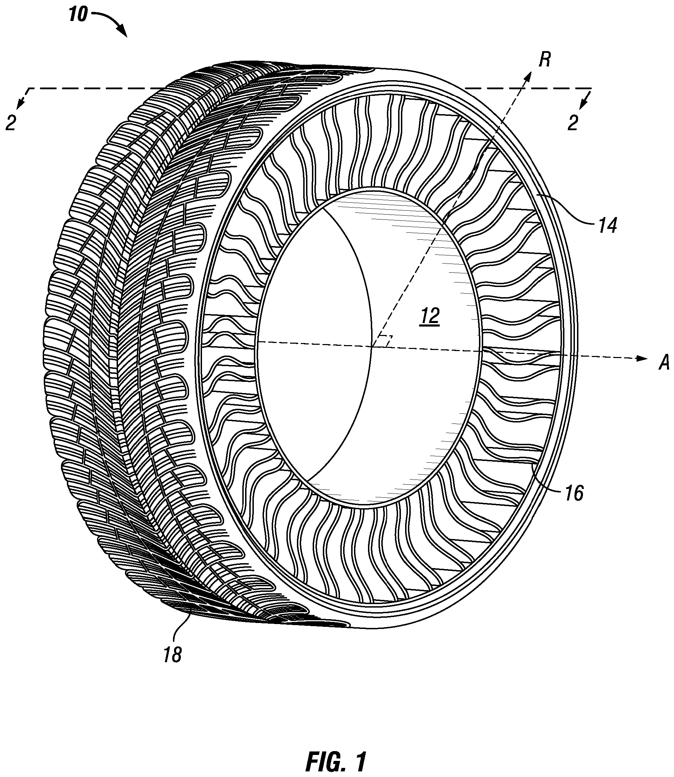

With reference to an exemplary embodiment shown in FIG. **1****,** a non-pneumatic tire **10** is illustrated. The non-pneumatic tire **10** comprises a rigid central annular portion **12.** The non-pneumatic tire **10** further comprises an annular shear band **14,** which is circumferentially arranged about the central annular portion **12** but not directly contacting the central annular portion **12.** The non-pneumatic tire **10** further comprises a plurality of deformable spokes **16,** which are arranged between the annular shear band **14** and the central annular portion **12.** The plurality of deformable spokes **16** are spaced apart around a rotational axis of the central annular portion **12,** which is also a rotational axis of the non-pneumatic tire **10.** The rotational axis of the central annular portion **12** and of the non-pneumatic tire **10** corresponds to an axial direction **A** of the central annular portion **12** and of the non-pneumatic tire **10.** In this way, a length of each of the deformable spokes **16** extends in a radial direction **R** of the central annular portion **12** of the non-pneumatic tire **10.** The axial direction **A** of the central annular portion **12** and of the non-pneumatic tire **10** is perpendicular to the radial direction **R** thereof. The annular shear band **14** is operably attached to a radially outward extent of the plurality of deformable spokes **16,** which, are in turn, connected at a radially inward extent to the central annular portion **12.**

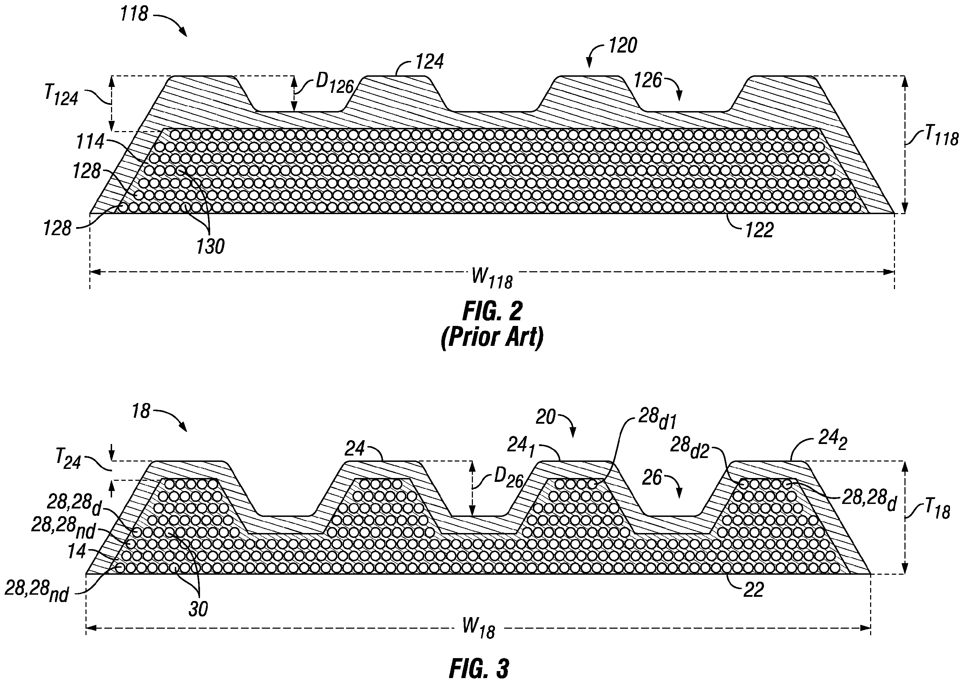

The non-pneumatic tire **10** of FIG. **1** also includes a tread **18.** With specific reference to FIG. **2****,** a prior art non-pneumatic tire tread is illustrated. The non-pneumatic tire tread includes an annular shear band **114** configured to extend circumferentially around a central annular portion of a non-pneumatic tire (not shown). The tread **118** includes an outer, ground-engaging side **120** and a bottom side **122.** The tread **118** has a length configured to extend circumferentially around the tire and a thickness **T₁₁₈** extending radially inward from the ground-engaging side **120** to the bottom side **122** of the tread **118,** the length being perpendicular to the thickness. The tread **118** further includes a width **W₁₁₈**, extending laterally between a pair of opposing lateral sides of the tread **118.** The width **W₁₁₈** extends perpendicular to the tread thickness **T₁₁₈** and to the tread length.

The prior art tread **118** includes a plurality of tread elements **124** arranged along the outer, ground-engaging side **120** of the tread **118.** The portion of the tread thickness **T₁₁₈** arranged within a tread element **124** has a thickness **T₁₂₄**, which extends radially outward from a most radially outward point of the annular shear band **114** below the tread element **124** to the outer, ground-engaging side **120** of the tread **118.** In the exemplary prior art non-pneumatic tire tread shown, a pair of tread elements **124** are spaced apart by a longitudinal groove **126.** Each longitudinal groove **126** has a depth **D₁₂₆**, which extends from the outer, ground-engaging side **120** of the corresponding tread element **124** to a bottom of the longitudinal groove **126.** Of final note, the annular shear band **114** includes a plurality of reinforcement layers **128,** each such layer **128** including a plurality of elongate reinforcements **130.**

With reference to FIG. **3****,** an improved non-pneumatic tire tread **18** is illustrated. The tread **18** defines an outer, ground-engaging side **20** of the non-pneumatic tire **10.** The outer, ground-engaging side **20** of the tread **18** extends annularly around the non-pneumatic tire **10** and the annular shear band **14.** The tread **18** also has a length, which extends in a circumferential direction of the non-pneumatic tire **10.** The tread **18** has a thickness **T₁₈**, which extends radially inward from the outer, ground-engaging side **20** of the tread **18** to a bottom side **22** of the tread **18.** The tread thickness **T₁₈** extends perpendicular to the tread length. The tread **18** further includes a width **W₁₈,** which extends laterally between a pair of opposing lateral sides of the tread **18.** The width **Wis** extends perpendicular, or transverse, to both a direction of the tread thickness **T₁₈** and a direction of the tread length.

As further illustrated in FIG. **3****,** the tread **18** of the non-pneumatic tire **10** further includes a plurality of tread elements **24.** The plurality of tread elements **24** are arranged along the outer, ground-engaging side **20** of the tread **18** and are spaced apart from each other by longitudinal grooves **26.** Each longitudinal groove **26** extends primarily in the direction of the length of the tread **18,** which corresponds to the circumference of the non-pneumatic tire **10** when the tread **18** is utilized therewith. Further, each longitudinal groove **26** has a depth **D₂₆**, which extends primarily in the direction of the tread thickness **T₁₈.** The depth **D₂₆** of the longitudinal groove **26** greater than a maximum thickness **T₂₄** as measured along a tread element **24** arranged adjacent to the longitudinal groove **26.** The thickness **T₂₄** of a tread element **24** is measured from the most radially outward point of the annular shear band **14** below the tread element **24** to the outer, ground-engaging side **20** of the tread **18** associated with the corresponding tread element **24.**

As further shown in FIG. **3****,** the annular shear band **14** of the non-pneumatic tire **10** includes a plurality of reinforcement layers **28** arranged within the annular shear band **14,** each such layer **28** including a plurality of elongate reinforcements **30.** The plurality of reinforcement layers **28** include both displaced (*i.e.,* discontinuous) reinforcement layers **28_{d}** and non-displaced (*i.e.,* continuous) reinforcement layers **28_{nd}**. Each reinforcement layer **28,** including each non-displaced reinforcement layer **28_{nd}** and each displaced reinforcement layer **28_{d},** extend circumferentially around the non-pneumatic tire **10** and in a direction of the tread width **W₁₈.** The displaced reinforcement layers **28_{d}** are arranged within the annular shear band **14** such that at least one of the longitudinal grooves **26** extends through at least one of the displaced reinforcement layers **28_{d}**. In this embodiment, the longitudinal groove **26** separates opposing portions **28_{d1}** and **28_{d2}** of each of the displaced reinforcement layers **28_{d}.** The opposing portions **28_{d1}** and **28_{d2}** of each of the displaced reinforcement layers **28_{d}** are located below opposing tread elements **24₁** and **24₂** arranged on either side of the corresponding longitudinal groove **26** in a direction of the tread width **W₁₈.** In addition, a plurality of non-displaced reinforcement layers **28_{nd}** are arranged within the annular shear band **14** of the non-pneumatic tire **10** such that the corresponding longitudinal grooves **26** do not extend through any of the plurality of non-displaced reinforcement layers **28_{nd}**. The plurality of displaced reinforcement layers **28_{d}** are arranged between the tread **18** and the plurality of non-displaced reinforcement layers **28_{nd}**. The plurality of displaced reinforcement layers **28_{d}** and the plurality of non-displaced reinforcement layers **28_{nd}** extend linearly in the direction of the tread width **W₁₈.**

In the embodiment of FIG. **3****,** the plurality of displaced reinforcement layers **28_{d}** are arranged within the annular shear band **14** in a stacked arrangement in the direction of the tread thickness **T₁₈.** In this way, the longitudinal grooves **26** extend to a depth within the annular shear band **14** that is more radially inward than a thickness **T₂₄** of an adjacent tread element **24.**

To the extent used, the terms "comprising," "including," and "having," or any variation thereof, as used in the claims and/or specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (i.e., not required) feature of the embodiments. Ranges that are described as being "between a and b" are inclusive of the values for "a" and "b" unless otherwise specified.

While the embodiments have been described with reference to particular embodiments thereof, it shall be understood that such description is by way of illustration only and should not be construed as limiting the scope of the claims herein. Accordingly, the scope and content herein are to be defined only by the terms of the following claims. Furthermore, it is understood that the features of any specific embodiment discussed herein may be combined with one or more features of any one or more embodiments otherwise discussed or contemplated herein unless otherwise stated, provided that it does not depart from the scope of the claims.

## Claims

1. A non-pneumatic tire (10) comprising:
a rigid central annular portion (12);
an annular shear band (14) circumferentially arranged about the rigid central annular portion (12);
one or more deformable spokes (16) arranged between the annular shear band (14) and the rigid central annular portion (12);
a tread (18) defining an outer, ground-engaging side (20) of the non-pneumatic tire (10) extending annularly around the non-pneumatic tire (10), wherein the tread (18) has a length, a thickness (T₁₈) extending radially inward from the outer, ground-engaging side (20) to a bottom side of the tread (22), and a width (W₁₈) extending laterally between a pair of opposing lateral sides of the tread, the width (W₁₈) extending transverse to a direction of the tread thickness (T₁₈) and to a direction of the tread length;
a plurality of tread elements (24) arranged along the outer, ground-engaging side of the tread (22), where the plurality of tread elements (24) include at least one pair of tread elements (24) spaced apart by a longitudinal groove (26), the longitudinal groove (26) extending primarily in the direction of the tread length;
**characterized in that** one or more displaced, i.e. discontinuous, reinforcement layers (28_{d}) extending circumferentially around the non-pneumatic tire (10) and in a direction of the tread width (W₁₈), the one or more displaced reinforcement layers (28_{d}) being arranged within the annular shear band (14) where the longitudinal groove (26) extends through at least one of the one or more displaced reinforcement layers (28_{d}) and thereby separates opposing portions (28_{d1}, 28_{d2}) of the at least one of the one or more displaced reinforcement layers (28_{d}), wherein the one or more displaced reinforcement layer includes a discontinuity, i.e. a spacing or void, into which a longitudinal groove extends; and
one or more non-displaced, i.e. continuous, reinforcement layers (28_{d}) extending circumferentially around the non-pneumatic tire (10) and in the direction of the tread width (W₁₈), the one or more non-displaced reinforcement layers (28_{nd}) being arranged within the annular shear band (14) such that the longitudinal groove does not extend through any of the one or more non-displaced reinforcement layers, wherein the one or more displaced reinforcement layers (28_{d}) are arranged between the tread (18) and the one or more non-displaced reinforcement layers (28_{nd}).

2. The non-pneumatic tire (10) of claim 1, wherein the longitudinal groove (26) has a depth (D₂₆) extending primarily in the direction of the tread thickness (T₁₈), further wherein the depth (D₂₆) of the longitudinal groove (26) is greater than a maximum thickness (T₂₄) of an adjacent tread element (24) of the plurality of tread elements (24), the maximum thickness (T₂₄) of the adjacent tread element (24) being measured from an outermost radial point of the annular shear band (14) below the tread element (24) to the outer, ground-engaging side (20) of the tread (18) associated with the adjacent tread element (24).

3. The non-pneumatic tire (10) of claim 2, wherein the depth (D₂₆) of the longitudinal groove (26) is equal to at least 125% of the maximum thickness (T₂₄) of the adjacent tread element (24) of the plurality of tread elements (24).

4. The non-pneumatic tire (10) of any one of claims 1 to 3, wherein the one or more displaced reinforcement layers (28_{d}) comprises a plurality of displaced reinforcement layers (28_{d}) in a stacked arrangement in the direction of the tread thickness (T₁₈).

5. The non-pneumatic tire (10) of any one of claims 1 to 4, wherein the one or more displaced reinforcement layers (28_{d}) and the one or more non-displaced reinforcement layers (28_{nd}) extend linearly or along an arcuate path in the direction of the tread width (W₁₈).

6. The non-pneumatic tire (10) of claim 4, wherein more than one displaced reinforcement layer (28_{d}) forms the stacked arrangement.

7. The non-pneumatic tire (10) of any one of claims 1 to 6, wherein the plurality of tread elements (24) include at least one pair of tread elements (24) spaced apart by a lateral groove (26), the lateral groove (26) extending primarily in the direction of the tread width (W₁₈).

## Patentansprüche

1. Luftloser Reifen (10), umfassend:
einen starren zentralen ringförmigen Teil (12);
ein ringförmiges Scherband (14), das am Umfang um den starren zentralen ringförmigen Teil (12) angeordnet ist;
eine oder mehrere verformbare Speichen (16), die zwischen dem ringförmigen Scherband (14) und dem starren zentralen ringförmigen Teil (12) angeordnet sind;
eine Lauffläche (18), die eine äußere, im Eingriff mit dem Boden befindliche Seite (20) des luftlosen Reifens (10) definiert und sich ringförmig um den luftlosen Reifen (10) herum erstreckt, wobei die Lauffläche (18) eine Länge, eine Dicke (T₁₈), die sich radial nach innen von der äußeren, im Eingriff mit dem Boden befindlichen Seite (20) bis zu einer Bodenseite der Lauffläche (22) erstreckt, und eine Breite (W₁₈) hat, die sich seitlich zwischen einem Paar von gegenüberliegenden Seitenflächen der Lauffläche erstreckt, wobei sich die Breite (W₁₈) quer zu einer Richtung der Laufflächendicke (T₁₈) und einer Richtung der Laufflächenlänge erstreckt;
eine Vielzahl von Laufflächenelementen (24), die entlang der äußeren, bodenberührenden Seite der Lauffläche (22) angeordnet sind, wobei die Vielzahl von Laufflächenelementen (24) mindestens ein Paar von Laufflächenelementen (24) umfasst, die mit Abstand zueinander durch eine Längsnut (26) angeordnet sind, wobei sich die Längsnut (26) hauptsächlich in Richtung der Laufflächenlänge erstreckt;
**dadurch gekennzeichnet, dass** sich eine oder mehrere verschobene, d.h. diskontinuierliche, Verstärkungsschichten (28_{d}) in Umfangsrichtung um den luftlosen Reifen (10) und in einer Richtung der Laufflächenbreite (W₁₈) erstrecken, wobei die eine oder die mehreren verschobenen Verstärkungsschichten (28_{d}) innerhalb des ringförmigen Scherbandes (14) angeordnet sind, wobei sich die Längsnut (26) durch mindestens eine der einen oder mehreren verschobenen Verstärkungsschichten (28_{d}) erstreckt und dadurch gegenüberliegende Abschnitte (28_{d1}, 28_{d2}) der mindestens einen oder mehreren verschobenen Verstärkungsschichten (28_{d}) trennt, wobei die eine oder die mehreren verschobenen Verstärkungsschichten eine Unstetigkeit, d. h. einen Zwischenraum oder eine Lücke, aufweisen, in die sich eine Längsnut erstreckt;
und
eine oder die mehreren nicht verschobenen, d.h. durchgehenden, Verstärkungsschichten (28_{d}), die sich in Umfangsrichtung um den luftlosen Reifen (10) und in Richtung der Laufflächenbreite (W₁₈) erstrecken, die einen oder die mehreren nicht verschobenen Verstärkungsschichten (28_{nd}) innerhalb des ringförmigen Scherbandes (14) angeordnet sind, sodass sich die Längsnut nicht durch die eine oder die mehreren nicht verschobenen Verstärkungsschichten erstreckt, wobei die eine oder die mehreren verschobenen Verstärkungsschichten (28_{d}) zwischen der Lauffläche (18) und der einen oder den mehreren nicht verschobenen Verstärkungsschichten (28_{nd}) angeordnet sind.

2. Luftloser Reifen (10) nach Anspruch 1, wobei die Längsnut (26) eine Tiefe (D₂₆) aufweist, die sich hauptsächlich in Richtung der Laufflächendicke (T₁₈) erstreckt, wobei ferner die Tiefe (D₂₆) der Längsnut (26) größer ist als eine maximale Dicke (T₂₄) eines benachbarten Laufflächenelements (24) aus der Vielzahl der Laufflächenelemente (24), wobei die maximale Dicke (T₂₄) des benachbarten Laufflächenelementes (24) von einem äußersten radialen Punkt des ringförmigen Scherbandes (14) unterhalb des Laufflächenelementes (24) bis zur äußeren, den Boden berührenden Seite (20) der Lauffläche (18) gemessen wird, die dem benachbarten Laufflächenelement (24) zugeordnet ist.

3. Luftloser Reifen (10) nach Anspruch 2, wobei die Tiefe (D₂₆) der Längsnut (26) mindestens 125 % der maximalen Dicke (T₂₄) des benachbarten Laufflächenelements (24) aus der Vielzahl der Laufflächenelemente (24) entspricht.

4. Luftloser Reifen (10) nach einem der Ansprüche 1 bis 3, wobei die eine oder die mehreren verschobenen Verstärkungslagen (28_{d}) eine Vielzahl von verschobenen Verstärkungslagen (28_{d}) in einer gestapelten Anordnung in Richtung der Laufflächendicke (T₁₈) umfassen.

5. Luftloser Reifen (10) nach einem der Ansprüche 1 bis 4, wobei die eine oder die mehreren verschobenen Verstärkungsschichten (28_{d}) und die eine oder die mehreren nicht-verschobenen Verstärkungsschichten (28_{nd}) linear oder entlang eines bogenförmigen Pfades in Richtung der Laufflächenbreite (W₁₈) verlaufen.

6. Luftloser Reifen (10) nach Anspruch 4, wobei mehr als eine verschobene Verstärkungslage (28_{d}) die gestapelte Anordnung bildet.

7. Luftloser Reifen (10) nach einem der Ansprüche 1 bis 6, wobei die Vielzahl von Laufflächenelementen (24) mindestens ein Paar von Laufflächenelementen (24) umfasst, die mit Abstand durch eine seitliche Nut (26) angeordnet sind, wobei sich die seitliche Nut (26) hauptsächlich in Richtung der Laufflächenbreite (W₁₈) erstreckt.

## Revendications

1. Pneu non pneumatique (10) comprenant :
une partie annulaire centrale rigide (12) ;
une bande de cisaillement annulaire (14) agencée de manière circonférentielle autour de la partie annulaire centrale rigide (12) ;
un ou plusieurs rayon(s) déformable(s) (16) agencé(s) entre la bande de cisaillement annulaire (14) et la partie annulaire centrale rigide (12) ;
une bande de roulement (18) définissant un côté extérieur engageant le sol (20) du pneu non-pneumatique (10) s'étendant de manière annulaire autour du pneu non-pneumatique (10), dans lequel la bande de roulement (18) présente une longueur, une épaisseur (T₁₈) s'étendant radialement vers l'intérieur à partir du côté extérieur engageant le sol (20) vers un fond de la bande de roulement (22), et une largeur (W₁₈) s'étendant latéralement entre une paire de côtés latéraux opposés de la bande de roulement, la largeur (W₁₈) s'étendant transversalement à une direction de l'épaisseur (T₁₈) de la bande de roulement et à une direction de la longueur de bande de roulement ;
une pluralité d'éléments de bande de roulement (24) agencés le long du côté extérieur engageant le sol de la bande de roulement (22), où la pluralité d'éléments de bande de roulement (24) inclut au moins une paire d'éléments de bande de roulement (24) espacés par un creux longitudinal (26), le creux longitudinal (26) s'étendant principalement dans la direction de la longueur de bande de roulement ;
**caractérisé en ce qu'**une ou plusieurs couches (28_{d}) de renfort déplacées, c'est-à-dire discontinues, s'étendant de manière circonférentielle autour du pneu non-pneumatique (10) et dans une direction de la largeur (W₁₈) de la bande de roulement, les une ou plusieurs couches (28_{d}) de renfort déplacées étant agencées à l'intérieur de la bande de cisaillement annulaire (14) où le creux longitudinal (26) s'étend à travers au moins une des une ou plusieurs couches (28_{d}) de renfort déplacées et sépare ainsi des parties opposées (28_{d1}, 28_{d2}) de l'au moins une des une ou plusieurs couches (28_{d}) de renfort déplacées, dans lequel l'une ou plusieurs couches de renfort déplacées inclut une discontinuité, c'est à dire un espacement ou un vide dans lequel s'étend un creux longitudinal ; et
une ou plusieurs couches (28_{nd}) de renfort non déplacées, c'est-à-dire continues, s'étendant de manière circonférentielle autour du pneu non-pneumatique (10) et dans la direction de la largeur (W₁₈) de la bande de roulement, l'une ou plusieurs couches (28_{nd}) de renfort non déplacées étant agencées à l'intérieur de la bande de cisaillement annulaire (14) de telle façon que le creux longitudinal ne s'étend pas à travers l'une quelconque des une ou plusieurs couches de renfort non déplacées, dans lequel l'une ou plusieurs couches de renfort déplacées (28_{d}) sont agencées entre la bande de roulement (18) et l'une ou plusieurs couches (28_{nd}) de renfort non déplacées.

2. Pneu non pneumatique (10) selon la revendication 1, dans lequel le creux longitudinal (26) présente une profondeur (D₂₆) s'étendant principalement dans la direction de l'épaisseur (T₁₈) de la bande de roulement, en outre dans lequel la profondeur (D₂₆) du creux longitudinal (26) est supérieure à une épaisseur maximale (T₂₄) d'un élément de bande de roulement (24) adjacent de la pluralité d'éléments de bande de roulement (24), l'épaisseur maximale (T₂₄) de l'élément de bande de roulement (24) adjacent étant mesurée à partir d'un point radial le plus extérieur de la bande de cisaillement annulaire (14) sous l'élément de bande de roulement (24) vers le côté extérieur engageant le sol (20) de la bande de roulement (18) associé à l'élément de bande de roulement (24) adjacent.

3. Pneu non pneumatique (10) selon la revendication 2, dans lequel la profondeur (D₂₆) du creux longitudinal (26) est égale à au moins 125 % de la profondeur maximale (T₂₄) de l'élément de bande de roulement (24) adjacent de la pluralité d'éléments de bande de roulement (24).

4. Pneu non pneumatique (10) selon l'une quelconque des revendications 1 à 3, dans lequel l'une ou plusieurs couches de renfort déplacées (28_{d}) comprend une pluralité de couches de renfort déplacées (28_{d}) dans un agencement empilé dans la direction de l'épaisseur (T₁₈) de la bande de roulement.

5. Pneu non pneumatique (10) selon l'une quelconque des revendications 1 à 4, dans lequel l'une ou plusieurs couches de renfort déplacées (28_{d}) et l'une ou plusieurs couches (28_{nd}) de renfort non déplacées s'étendent de manière linéaire ou le long d'un trajet arqué dans la direction de la largeur (W₁₈) de la bande de roulement.

6. Pneu non pneumatique (10) selon la revendication 4, dans lequel plus d'une couche de renfort déplacée (28_{d}) forme l'agencement empilé.

7. Pneu non pneumatique (10) selon l'une quelconque des revendications 1 à 6, dans lequel la pluralité d'éléments de bande de roulement (24) inclut au moins une paire d'éléments de bande de roulement (24) espacés par un creux latéral (26), le creux latéral (26) s'étendant principalement dans la direction de la largeur (W₁₈) de la bande de roulement.
